# EUROPÄISCHE PATENTSCHRIFT

(11) **EP 2 882 611 B1**
(45) Veröffentlichungstag und Bekanntmachung des Hinweises auf die Patenterteilung: **10.10.2018**
(21) Anmeldenummer: 13748301.2
(22) Anmeldetag: 12.08.2013
(51) Int. Cl.: B60N 2/815, B60N 2/818, B60N 2/824

(54) **VERRIEGELUNGSVORRICHTUNG FÜR EINE KOPFSTÜTZE UND FAHRZEUGSITZ**
LOCKING DEVICE FOR A HEADREST AND VEHICLE SEAT
DISPOSITIF DE VERROUILLAGE POUR UN APPUIE-TÊTE ET SIÈGE DE VÉHICULE

(30) Priorität: 10.08.2012 DE 102012015810
(43) Veröffentlichungstag der Anmeldung: 17.06.2015
(73) Patentinhaber: Adient Luxembourg Holding S.à r.l., 1855 Luxembourg (LU)
(72) Erfinder: WEGE, Lutz, 42655 Solingen (DE)
(74) Vertreter: Loock, Jan Pieter
(86) Internationale Anmeldenummer: PCT/EP2013/066797
(87) Internationale Veröffentlichungsnummer: WO 2014/023843

(56) Entgegenhaltungen:
- DE-A1-102005 012 896
- DE-T2- 69 206 144
- US-A1- 2005 077 772

## Beschreibung

### Stand der Technik

Die Erfindung betrifft eine Verriegelungsvorrichtung für eine Kopfstütze, wobei die Verriegelungsvorrichtung ein Sperrelement aufweist, welches zum Eingriff mit einer Ausnehmung in einer Kopfstützenstange der Kopfstütze vorgesehen ist.

Solche Verriegelungsvorrichtungen sind allgemein bekannt. Beispielsweise weisen Kopfstützen häufig zwei Kopfstützenstangen auf, welche sich parallel von einem Kopfanlagepolster in Richtung einer Rückenlehne erstrecken und in entsprechenden Führungshülsen der Rückenlehne höhenverstellbar gehalten werden. Zur Fixierung der Kopfstütze in einer gewünschten Höhe ist wenigstens eine Kopfstützenstange mit Ausnehmungen versehen, in welche ein Sperrelement der Führungshülse formschlüssig eingreifen kann. Das Sperrelement ist federelastisch in Richtung der Ausnehmung vorgespannt. Der Benutzer kann das Sperrelement mittels eines Betätigungselements entgegen der Federkraft außer Eingriff mit der Ausnehmung bringen, um die Verriegelungsvorrichtung zu Entriegeln und eine Höhenverstellung der Kopfstütze vornehmen zu können. In die gewünschte Position kann der Benutzer das Betätigungselement wieder loslassen, so dass das Sperrelement in eine entsprechende Ausnehmung einrastet und die Verriegelungsvorrichtung wieder verriegelt ist.

Aus der Druckschrift US 2005 / 0077772 A1 ist eine Kopfstützentragestruktur zur Befestigung einer Kopfstütze bekannt, die eine Kopfstütze, einen Aufnahmebereich für die Kopfstütze, ein Höhenregulierungsbereich, einen Bereich, der das Abrutschen unterbindet, und ein rohrförmiges Element zum Eingriff in den Aufnahmebereich aufweist. Das röhrenförmige Element ist typischerweise vertikal im Autositz angeordnet und die Kopfstützentragestruktur weist zusätzlich ein Verriegelungselements, das am oberen Ende des rohrförmigen Elements angeordnet ist, auf. Ein elastisches Element dient hierbei dem Andrücken des Verriegelungselements in Richtung der Kopfstützen, um in den Höhenregulierungsbereich oder den Bereich, der das Abrutschen unterbindet, einzugreifen, Durch eine Druckbetätigung von außen wird das Verriegelungselement zurückbewegt, um den Höhenregulierungsbereich oder den Bereich, der das Abrutschen unterbindet, freizugeben.

Nachteilig an solchen aus dem Stand der Technik bekannten Verriegelungsvorrichtungen ist, dass bei einem Verdrehen der Kopfstützenstangen gegenüber den Führungshülsen ein ungewolltes Entriegeln der Verriegelungsvorrichtung vorkommen kann. Insbesondere im Falle eines Unfalls können hohe Beschleunigungskräfte auftreten, durch welche ein solches Verdrehen verursacht wird. Wenn die Kopfstützenstangen entriegelt sind, ist die Kopfstütze freibeweglich und kann sogar gänzlich aus den Führungshülsen herausgeschoben werden. Hierdurch geht eine erhebliche Verletzungsgefahr für den auf dem Fahrzeugsitz sitzenden Fahrzeuginsassen, insbesondere im Falle eines Unfalls, aus.

### Offenbarung der Erfindung

Es ist die Aufgabe der vorliegenden Erfindung eine Verriegelungsvorrichtung für eine Kopfstütze bereitzustellen, bei welcher eine versehentliche Entriegelung aufgrund von relativen Drehbewegungen zwischen einer Kopfstützenstange und einer Führungshülse verhindert wird.

Diese Aufgabe wird mit einer Verriegelungsvorrichtung gemäß Anspruch 1 gelöst.

In vorteilhafter Weise ist das Sperrelement bei einer relativen Drehbewegung zwischen der Führungshülse und der Kopfstützenstange in der Lage, sich mit der Kopfstützenstange zumindest teilweise mitzudrehen, da das Sperrelement gegenüber der Sperreinheit drehbar gelagert ist. Die gemeinsame Drehung von Kopfstützenstange und Sperrelement hat zur Folge, dass die Lage des Sperrelements in der Ausnehmung der Kopfstützenstange nicht oder zumindest deutlich weniger verändert wird und somit keine Entriegelung der Verriegelungsvorrichtung erfolgt. Mit anderen Worten: Das Sperrelement ist derart in der Sperreinheit gelagert, dass das Sperrelement eine Kompensationsdrehung gegenüber der Sperreinheit durchführen kann, so dass eine Drehung der Kopfstützenstange zumindest teilweise kompensiert wird.

Gemäß einer bevorzugten Ausführungsform der vorliegenden Erfindung ist vorgesehen, dass die Sperreinheit und/oder das Sperrelement scheibenartig ausgebildet sind. In vorteilhafter Weise kann somit eine möglichst flache und bauraumkompakte Verriegelungsvorrichtung bereitgestellt werden.

Erfindungsgemäß ist vorgesehen, dass die Sperreinheit eine erste Durchgangsöffnung aufweist, durch welche die Kopfstützenstange verläuft, wobei das Sperrelement eine zweite Durchgangsöffnung aufweist, durch welche die Kopfstützenstange verläuft, wobei das Sperrelement insbesondere in der ersten Durchgangsöffnung angeordnet ist. Das Sperrelement weist vorzugsweise einen runden und insbesondere kreisrunden Außenumfang in einer zur Drehachse senkrechten Ebene auf, wobei die erste Durchgangsöffnung eine runde und insbesondere kreisrunde Innenkontur zur Aufnahme des Sperrelements umfasst. Die kreisrunden Konturen dienen dazu, das Sperrelement drehbar in der Sperreinheit zu lagern und gleichzeitig senkrecht zur Drehachse formschlüssig zu halten. Auf diese Weise wird ein besonders stabiler und zuverlässiger Aufbau der Verriegelungsvorrichtung erzielt. Das Sperrelement ist dabei derart in der ersten Durchgangsöffnung gelagert ist, dass sich das Sperrelement bei einer relativen Drehbewegung zwischen der Führungshülse und der Kopfstützenstange zumindest teilweise gemeinsam mit der Kopfstützenstange um die Drehachse dreht, so dass eine ungewollte Entriegelung der Verriegelungsvorrichtung verhindert wird. Das Sperrelement ist insbesondere um einen Winkel zwischen 5 und 45 Grad, bevorzugt zwischen 15 und 35 Grad und besonders bevorzugt von im Wesentlichen 25 Grad gegenüber der Sperreinheit um die Drehachse drehbar gelagert. Es hat sich gezeigt, dass ein ungewolltes Entriegeln der Verriegelungsvorrichtung mit den vorgennannte Winkelbereichen zuverlässig verhindert werden kann.

Gemäß einer bevorzugten Ausführungsform der vorliegenden Erfindung ist vorgesehen, dass die Sperreinheit als Betätigungstaste fungiert, welche entlang einer zur Drehachse senkrechten Verschieberichtung verschiebbar ist. In vorteilhafter Weise kann die Sperreinheit unmittelbar als Handhabungselement für den Benutzer in Form eines Drucktasters verwendet werden, um die Verriegelungsvorrichtung zu entriegeln. Vorteilhafterweise ist hierdurch auch das drehbar in der Sperreinheit gelagerte Sperrelement entlang der Verschieberichtung translatorisch verschiebbar, so dass stets eine Entriegelung der Verriegelungsvorrichtung möglich ist. Insbesondere kann die Verriegelungsvorrichtung auch dann entriegelt werden, wenn sich das Sperrelement mit der Kopfstützenstange mitgedreht hat und daher gegenüber der Sperreinheit verdreht ist.

Gemäß einer bevorzugten Ausführungsform der vorliegenden Erfindung ist vorgesehen, dass die Führungshülse im Bereich der Sperreinheit und in einer zur Drehachse senkrechten Ebene eine u-förmige Aufnahme bildet, in welcher die Sperreinheit entlang der Verschieberichtung verschiebbar gelagert ist, wobei die Sperreinheit bezüglich der Drehachse drehfest gegenüber der Führungshülse gelagert ist. In vorteilhafter Weise dient die Aufnahme dazu, einerseits eine drehfeste Arretierung der Sperreinheit gegenüber der Führungshülse zu erzielen und andererseits eine Verschiebbarkeit der Sperreinheit gegenüber der Führungshülse entlang der Verschieberichtung sicherzustellen. Vorzugsweise ist dabei die Sperreinheit mittels einer Feder federelastisch in Richtung der Verriegelungsposition vorgespannt.

Ein weiterer Gegenstand der vorliegenden Erfindung ist ein Fahrzeugsitz aufweisend eine Kopfstütze, eine Rückenlehne und eine erfindungsgemäße Verriegelungsvorrichtung, wobei die Kopfstütze mittels der Verriegelungsvorrichtung höhenverstellbar an der Rückenlehne befestigt ist.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Figuren

- **Figuren 1a, 1b**: zeigen schematische Schnittbildansichten einer Verriegelungsvorrichtung gemäß einer beispielhaften Ausführungsform der Erfindung.
- **Figuren 2a, 2b**: zeigen schematische weitere Schnittbildansichten der Verriegelungsvorrichtung gemäß der beispielhaften Ausführungsform der Erfindung, bei welcher sich das Sperrelement der Verriegelungsvorrichtung in der Verriegelungsposition befindet.
- **Figuren 3a, 3b**: zeigen schematische weitere Schnittbildansichten der Verriegelungsvorrichtung gemäß der beispielhaften Ausführungsform der Erfindung, bei welcher sich das Sperrelement der Verriegelungsvorrichtung in der Entriegelungsposition befindet.

### Ausführungsformen der Erfindung

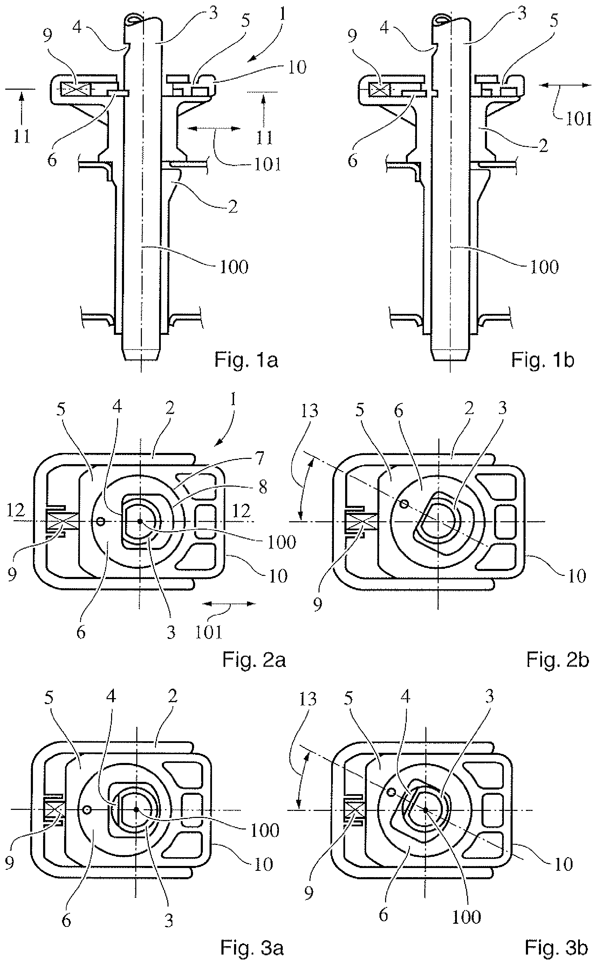

In **Figuren 1a und 1b** sind schematische Ansichten einer Verriegelungsvorrichtung 1 für eine Kopfstütze (nicht dargestellt) gemäß einer beispielhaften Ausführungsform dargestellt. Die Verriegelungsvorrichtung 1 weist eine Führungshülse 2 auf, in welcher eine Kopfstützenstange 3 zur Halterung eines Kopfanlageteils (nicht dargestellt) befestigt ist. Die Kopfstützenstange 3 umfasst ein Rohr oder einen Vollmaterialzylinder, auf dessen äußerer Mantelfläche keilförmige Ausnehmungen 4 in gleichmäßigen Abständen entlang einer axialen Richtung 100 der Kopfstützenstange 3 eingebracht sind.

Die Kopfstützenstange 3 ist in der Führungshülse 2 in axialer Richtung 100 verschiebbar gelagert. Die Führungshülse 2 ist vorzugsweise in die Oberseite einer Rückenlehne eines Fahrzeugsitzes eingelassen (nicht dargestellt). Die Verriegelungsvorrichtung 1 weist eine Sperreinheit 5 auf, welche entlang einer zur axialen Richtung 100 senkrechten Verschieberichtung 101 gegenüber der Führungshülse 2 verschiebbar gelagert ist. Die Sperreinheit 5 ist mit einem Sperrelement 6 gekoppelt, welches durch eine Bewegung der Sperreinheit 6 entlang der Verschieberichtung 101 zwischen einer Verriegelungsposition (siehe Figur 1a), in welcher das Sperrelement 6 mit einer der Ausnehmungen 4 in Eingriff ist, und einer Entriegelungsposition (siehe Figur 1b), in welcher das Sperrelement 6 außer Eingriff mit den Ausnehmungen 4 ist, bewegbar. In der Verriegelungsposition wird eine Bewegung der Kopfstützenstange 3 in axialer Richtung 100 durch das Sperrelement 6 unterbunden, während in der Entriegelungsposition die Kopfstützenstange 3 in axialer Richtung 100, beispielsweise zur Höhenverstellung der Kopfstütze des Fahrzeugsitzes, frei verschiebbar ist. Die Sperreinheit 5 wird mittels einer Feder 9 in Richtung der Verriegelungsposition federelastisch vorgespannt. Die Sperreinheit 5 fungiert als Betätigungstaste und umfasst hierfür einen Betätigungsabschnitt 10, welcher als Handhabungsmittel von einem Benutzer betätigt werden kann. Durch eine manuelle Betätigung des Betätigungsabschnitts 10 entlang der Verschieberichtung 101 und entgegen der Federkraft der Feder 9 wird das Sperrelement 6 von der Verriegelungsposition in die Entriegelungsposition bewegt. Ein Loslassen des Betätigungsabschnitts 10 führt dazu, dass sich das Sperrelement 6 aufgrund der Feder 9 zurück in die Verriegelungsposition bewegt.

In **Figuren 2a und 2b** sind schematische weitere Schnittbildansichten der Verriegelungsvorrichtung 1 gemäß der beispielhaften Ausführungsform der Erfindung dargestellt, bei welcher sich das Sperrelement 6 in der Verriegelungsposition befindet. Die Figuren 2a und 2b zeigen eine Querschnittdarstellung der Verriegelungsvorrichtung 1 gemäß der in Figuren 1a gezeigten Schnittlinie 11-11, während die Figuren 1a und 1b eine Längsschnittdarstellung der Verriegelungsvorrichtung 1 gemäß der in Figur 2a gezeigten Schnittlinie 12-12 zeigen. In Figur 2a ist zu sehen, dass die Führungshülse 2 im Bereich der Sperreinheit 5 eine u-förmige Aufnahme bildet, in welche die Sperreinheit 5 drehfest bezüglich einer zur axialen Richtung 100 parallelen Drehachse 100 und translatorisch verschiebbar entlang der Verschieberichtung 101 gelagert ist. Die Sperreinheit 5 ist hierfür als scheibenförmiges rechteckiges Element mit abgerundeten Ecken ausgeführt. Die Sperreinheit 5 umfasst ferner eine kreisrunde erste Durchgangsöffnung 7, in welcher das Sperrelement 6 angeordnet ist und durch welches die Kopfstützenstange 3 verläuft. Das schreibförmig ausgebildete Sperrelement 6 weist eine korrespondierende kreisrunde Außenkontur auf, so dass das Sperrelement 6 drehbar um die Drehachse 100 in der Sperreinheit 5 gelagert ist. Das Sperrelement 6 weist ferner eine zweite Durchgangsöffnung 8 auf, durch welche die Kopfstützenstange 3 verläuft. Ein Wandungsbereich der zweiten Durchgangsöffnung 8 agiert als Sperrhebel, welche in die Ausnehmung 4 bewegt ist und somit eine Höheverstellung der Kopfstütze verhindert.

In Figur 2b ist nun eine Situation dargestellt, in welcher die Kopfstützenstange 3 gegenüber der Führungshülse 2 um die Drehachse 100, beispielsweise aufgrund von unfallbedingten Beschleunigungskräften, verdreht ist. Da das Sperrelement 6 gegenüber der Sperreinheit 5 drehbar gelagert ist, dreht sich das Sperrelement 6 mit der Kopfstützenstange 3 mit und bleibt daher in Eingriff mit der Ausnehmung 4. Die Verdrehung der Kopfstützenstange 3 führt somit nicht zu einer ungewollten Öffnung der Verriegelungsvorrichtung 1. Im vorliegenden Beispiel wird das Sperrelement 6 gegenüber der Sperreinheit 5 um einen Winkel 13 zwischen 30 und 40 Grad verdreht.

In **Figuren 3a und 3b** sind schematische weitere Schnittbildansichten der Verriegelungsvorrichtung 1 gemäß der beispielhaften Ausführungsform der Erfindung dargestellt, bei welcher sich das Sperrelement 6 in der Verriegelungsposition befindet. In Figur 3a wird durch einen Benutzer eine Kraft auf den Betätigungsbereich 10 ausgeübt, wodurch sich die Sperreinheit 5 entgegen der Federkraft der Feder 9 in Richtung der Feder 9 bewegt. Das Sperrelement 6 bewegt sich zwangsläufig mit der Sperreinheit 5 mit, so dass die Sperreinheit 5 in die Entriegelungsposition bewegt wird und außer Eingriff mit der Ausnehmung 4 kommt. Die Höhe der Kopfstütze kann von dem Benutzer nun frei justiert werden. In Figur 3b ist die Situation gezeigt, in welcher die Kopfstützenstange 3 gegenüber der Führungshülse 2 verdreht ist (Vgl. Figur 2b). Eine Betätigung der Sperreinheit 5 durch den Benutzer führ auch hier dazu, dass das Sperrelement 6 in die Entriegelungsposition überführt und außer Eingriff mit der Ausnehmung 4 gebracht wird, obwohl das Sperrelement 6 gegenüber der Sperreinheit 5 um den Winkel 13 verdreht ist.

### BEZUGSZEICHENLISTE

- 1: Verriegelungsvorrichtung
- 2: Führungshülse
- 3: Kopfstützenstange
- 4: Ausnehmung
- 5: Sperrelement
- 6: Sperreinheit
- 7: Erste Durchgangsöffnung
- 8: Zweite Durchgangsöffnung
- 9: Feder
- 10: Betätigungsbereich
- 11: Schnittlinie
- 12: Schnittlinie
- 13: Winkel
- 100: Axiale Richtung, Drehachse
- 101: Verschieberichtung

## Patentansprüche

1. Verriegelungsvorrichtung (1) für eine Kopfstütze aufweisend eine Kopfstützenstange (3), eine Führungshülse (2) für die Kopfstützenstange (3) und eine Sperreinheit (5), wobei die Sperreinheit (5) relativ zur Führungshülse (2) zwischen einer Verriegelungsposition, in welcher ein Sperrelement (6) der Sperreinheit (5) mit einer in der Kopfstützenstange (3) ausgebildeten Ausnehmung (4) in Eingriff ist, und einer Entriegelungsposition, in welcher das Sperrelement (6) außer Eingriff mit in der Kopfstützenstange (3) ausgebildeten Ausnehmungen (4) ist, bewegbar ist, wobei das Sperrelement (6) gegenüber der Sperreinheit (5) um eine zur Kopfstützenstange (3) parallele Drehachse (100) drehbar gelagert ist, **dadurch gekennzeichnet, dass** die Sperreinheit (5) eine erste Durchgangsöffnung (7) aufweist, durch welche die Kopfstützenstange (3) verläuft, und wobei das Sperrelement (6) eine zweite Durchgangsöffnung (8) aufweist, durch welche die Kopfstützenstange (3) verläuft, wobei das Sperrelement (6) in der ersten Durchgangsöffnung (7) angeordnet ist.

2. Verriegelungsvorrichtung (1) nach Anspruch 1, wobei die Sperreinheit (5) und/oder das Sperrelement (6) scheibenartig ausgebildet sind.

3. Verriegelungsvorrichtung (1) nach einem der vorhergehenden Ansprüche, wobei das Sperrelement (6) einen runden und insbesondere kreisrunden Außenumfang in einer zur Drehachse (100) senkrechten Ebene aufweist und wobei die erste Durchgangsöffnung (7) eine runde und insbesondere kreisrunde Innenkontur zur Aufnahme des Sperrelements (6) umfasst.

4. Verriegelungsvorrichtung (1) nach Anspruch 3, wobei das Sperrelement (6) derart in der ersten Durchgangsöffnung (7) gelagert ist, dass sich das Sperrelement (6) bei einer relativen Drehbewegung zwischen der Führungshülse (2) und der Kopfstützenstange (3) zumindest teilweise gemeinsam mit der Kopfstützenstange (3) um die Drehachse (100) dreht.

5. Verriegelungsvorrichtung (1) nach Anspruch 4, wobei das Sperrelement (6) um einen Winkel (13) zwischen 5 und 45 Grad, bevorzugt zwischen 15 und 35 Grad und besonders bevorzugt von im Wesentlichen 25 Grad gegenüber der Sperreinheit (5) um die Drehachse (100) drehbar gelagert ist.

6. Verriegelungsvorrichtung (1) nach einem der vorhergehenden Ansprüche, wobei die Sperreinheit (5) als Betätigungstaste fungiert, welche entlang einer zur Drehachse (100) senkrechten Verschieberichtung (101) verschiebbar ist.

7. Verriegelungsvorrichtung (1) nach Anspruch 6, wobei die Führungshülse (2) im Bereich der Sperreinheit (5) und in einer zur Drehachse (100) senkrechten Ebene eine u-förmige Aufnahme bildet, in welcher die Sperreinheit (5) entlang der Verschieberichtung (101) verschiebbar gelagert ist, wobei die Sperreinheit (5) bezüglich der Drehachse (100) drehfest gegenüber der Führungshülse (2) gelagert ist.

8. Verriegelungsvorrichtung (1) nach einem der vorhergehenden Ansprüche, wobei die Sperreinheit (5) mittels einer Feder (9) federelastisch in Richtung der Verriegelungsposition vorgespannt ist.

9. Fahrzeugsitz aufweisend eine Kopfstütze, eine Rückenlehne und eine Verriegelungsvorrichtung nach einem der vorhergehenden Ansprüche, wobei die Kopfstütze mittels der Verriegelungsvorrichtung höhenverstellbar an der Rückenlehne befestigt ist.

## Claims

1. Locking device (1) for a headrest, having a headrest rod (3), a guide sleeve (2) for the headrest rod (3) and a blocking unit (5), wherein the blocking unit (5) is movable relative to the guide sleeve (2) between a locking position, in which a blocking element (6) of the blocking unit (5) is in engagement with a recess (4) formed in the headrest rod (3), and an unlocking position, in which the blocking element (6) has been disengaged from the recesses (4) formed in the headrest rod (3), wherein the blocking element (6) is mounted such that it can be rotated in relation to the blocking unit (5) about an axis of rotation (100) parallel to the headrest rod (3), **characterized in that** the blocking unit (5) has a first through-passage opening (7), through which the headrest rod (3) runs, and wherein the blocking element (6) has a second through-passage opening (8), through which the headrest rod (3) runs, wherein the blocking element (6) is arranged in the first through-passage opening (7).

2. Locking device (1) according to Claim 1, wherein the blocking unit (5) and/or the blocking element (6) are/is of plate-like design.

3. Locking device (1) according to either of the preceding claims, wherein the blocking element (6) has a round and in particular circular outer circumference in a plane perpendicular to the axis of rotation (100), and wherein the first through-passage opening (7) comprises a round and in particular circular inner contour for accommodating the blocking element (6).

4. Locking device (1) according to Claim 3, wherein the blocking element (6) is mounted in the first through-passage opening (7) such that, when the guide sleeve (2) and the headrest rod (3) rotate relative to one another, the blocking element (6) rotates about the axis of rotation (100) at least to some extent together with the headrest rod (3).

5. Locking device (1) according to Claim 4, wherein the blocking element (6) is mounted such that it can be rotated about the axis of rotation (100) in relation to the blocking unit (5) through an angle (13) between 5 and 45 degrees, preferably between 15 and 35 degrees and particularly preferably of essentially 25 degrees.

6. Locking device (1) according to one of the preceding claims, wherein the blocking unit (5) functions as an actuating button which can be displaced along a displacement direction (101) perpendicular to the axis of rotation (100).

7. Locking device (1) according to Claim 6, wherein, in the region of the blocking unit (5) and in a plane perpendicular to the axis of rotation (100), the guide sleeve (2) forms a u-shaped mount, in which the blocking unit (5) is mounted such that it can be displaced along the displacement direction (101), wherein the blocking unit (5) is mounted in a rotationally fixed manner, as seen in respect of the axis of rotation (100), in relation to the guide sleeve (2).

8. Locking device (1) according to one of the preceding claims, wherein the blocking unit (5) is prestressed resiliently in the direction of the locking position by means of a spring (9).

9. Vehicle seat having a headrest, a backrest and a locking device according to one of the preceding claims, wherein the headrest is fastened on the backrest such that it can be adjusted in height by means of the locking device.

## Revendications

1. Dispositif de verrouillage (1) pour un appuie-tête présentant une tige d'appuie-tête (3), un fourreau de guidage (2) pour la tige d'appuie-tête (3) et une unité de blocage (5), dans lequel l'unité de blocage (5) est déplaçable par rapport au fourreau de guidage (2) entre une position de verrouillage, dans laquelle un élément de blocage (6) de l'unité de blocage (5) est en prise avec un creux (4) formé dans la tige d'appuie-tête (3), et une position de déverrouillage, dans laquelle l'élément de blocage (6) n'est pas en prise avec des creux (4) formés dans la tige d'appuie-tête (3), dans lequel l'élément de blocage (6) est monté de façon rotative par rapport à l'unité de blocage (5) autour d'un axe de rotation (100) parallèle à la tige d'appuie-tête (3), **caractérisé en ce que** l'unité de blocage (5) présente une première ouverture de passage (7), à travers laquelle passe la tige d'appuie-tête (3), et dans lequel l'élément de blocage (6) présente une deuxième ouverture de passage (8), à travers laquelle passe la tige d'appuie-tête (3), dans lequel l'élément de blocage (6) est disposé dans la première ouverture de passage (7).

2. Dispositif de verrouillage (1) selon la revendication 1, dans lequel l'unité de blocage (5) et/ou l'élément de blocage (6) sont réalisés en forme de rondelle.

3. Dispositif de verrouillage (1) selon l'une quelconque des revendications précédentes, dans lequel l'élément de blocage (6) présente un pourtour extérieur rond et en particulier circulaire dans un plan perpendiculaire à l'axe de rotation (100) et dans lequel la première ouverture de passage (7) présente un pourtour intérieur rond et en particulier circulaire pour recevoir l'élément de blocage (6).

4. Dispositif de verrouillage (1) selon la revendication 3, dans lequel l'élément de blocage (6) est monté dans la première ouverture de passage (7) de telle manière que l'élément de blocage (6) tourne autour de l'axe de rotation (100), au moins en partie de concert avec la tige d'appuie-tête (3), lors d'un mouvement de rotation relatif entre le fourreau de guidage (2) et la tige d'appuie-tête (3).

5. Dispositif de verrouillage (1) selon la revendication 4, dans lequel l'élément de blocage (6) est monté de façon rotative autour de l'axe de rotation (100) d'un angle (13) entre 5 et 45 degrés, de préférence entre 15 et 35 degrés, et de préférence encore essentiellement de 25 degrés par rapport à l'unité de blocage (5).

6. Dispositif de verrouillage (1) selon l'une quelconque des revendications précédentes, dans lequel l'unité de blocage (5) fonctionne comme touche d'actionnement, qui peut se déplacer le long d'une direction de déplacement (101) perpendiculaire à l'axe de rotation (100).

7. Dispositif de verrouillage (1) selon la revendication 6, dans lequel le fourreau de guidage (2) forme dans la région de l'unité de blocage (5) et dans un plan perpendiculaire à l'axe de rotation (100), un logement en forme de U, dans lequel l'unité de blocage (5) est montée de façon déplaçable dans la direction de déplacement (101), dans lequel l'unité de blocage (5) est montée sans rotation par rapport au fourreau de guidage (2) par rapport à l'axe de rotation (100).

8. Dispositif de verrouillage (1) selon l'une quelconque des revendications précédentes, dans lequel l'unité de blocage (5) est précontrainte élastiquement au moyen d'un ressort (9) en direction de la position de verrouillage.

9. Siège de véhicule présentant un appuie-tête, un dossier et un dispositif de verrouillage selon l'une quelconque des revendications précédentes, dans lequel l'appuie-tête est fixé au dossier de façon réglable en hauteur au moyen du dispositif de verrouillage.
